# EUROPÄISCHE PATENTSCHRIFT

(11) **EP 0 418 576 B1**
(45) Veröffentlichungstag und Bekanntmachung des Hinweises auf die Patenterteilung: **02.03.1994**
(21) Anmeldenummer: 90116051.5
(22) Anmeldetag: 22.08.1990
(51) Int. Cl.: G01N 22/00

(54) **Verfahren und Vorichtung zur Analyse gasförmiger Medien mittels Mikrowellen**
Procedure and equipment for analysing gaseous media by means of microwaves
Procédé et dispositif pour l'analyse des fluides au moyen de micro-ondes

(30) Priorität: 01.09.1989 DE 3929079
(43) Veröffentlichungstag der Anmeldung: 27.03.1991
(73) Patentinhaber: Dreizler, Helmut, Prof. Dr., D-24161 Altenholz (DE); Andresen, Uwe, Dr., D-24582 Bordesholm (DE); Stahl, Wolfgang, Dr., D-24114 Kiel (DE); Keussen, Christof, Dipl.-Chem., D-24106 Kiel (DE)
(72) Erfinder: Dreizler, Helmut, Prof. Dr., D-24161 Altenholz (DE); Andresen, Uwe, Dr., D-24582 Bordesholm (DE); Stahl, Wolfgang, Dr., D-24114 Kiel (DE); Keussen, Christof, Dipl.-Chem., D-24106 Kiel (DE)
(74) Vertreter: Hansmann, Dierk, Dipl.-Ing.

(56) Entgegenhaltungen:
- DE-A- 2 155 969
- DE-A- 2 407 551
- DE-A- 2 529 829
- DE-A- 3 622 957
- DE-A- 3 723 606
- DE-B- 2 442 581
- REVIEW OF SICENTIFIC IN- STRUMENTS; Band 58, Nr. 6, Juni 1987, American Institute of Physics RAW T.T. et al. "High-temperature Stark and radio-frequency-microwave double-resonance microwave spectrometer" Seiten 979-984
- REVIEW OF SICENTIFIC INSTRUMENTS, Band 52, Nr. 1, Jänner 1981, American Institute of Phyisics BALLE T.J. et al. "Fabry-Perot cavity pulsed Fourier transform microwave spectrometer with a pulsed nozzle particle source" Seiten 33-45
- HEWLETT-PACKARD JOURNAL, Juni 1971, Hewlett-Packard Company HARRINGTON H.W. et al. "The Routine Rotational Microwave Spectrometer" Seiten 2-15

## Beschreibung

Die Erfindung betrifft ein Verfahren zur Untersuchung von Substanzen mittels Mikrowellen. Ferner betrifft sie eine Vorrichtung zur Durchführung eines derartigen Verfahrens.

Es ist bereits bekannt, die Zusammensetzung von Gasgemischen, aber auch von Flüssigkeiten und Feststoffen, die durch geeignete Maßnahmen in den gasförmigen Zustand überführt werden, mit Hilfe von Mikrowellenstrahlung quantitativ zu bestimmen. Indem die Frequenz der verwendeten Mikrowellen geeignet gewählt wird, werden die Moleküle jeweils eines der in dem zu analysierenden Gasgemisch vorhandenen Gase zu molekültypischen Rotationsübergängen angeregt, woraus sich bei Kenntnis dieser Rotationsfrequenzen der einzelnen Gase die Möglichkeit einer Identifizierung ergibt.

Bei einem aus der DE-A-36 22 957 bekannten Verfahren und Vorrichtung wird die Absorption von Frequenzen aus der einfallenden Mikrowellenstrahlung für den Nachweis verwendet. Die Absorptionslinien werden dabei durch das Anlegen eines elektrischen Feldes und den dann wirksam werdenden Stark-Effekt aufgespalten, woraus eine vergleichsweise gute Nachweisempfindlichkeit durch die sogenannte Starkeffekt-Modulation resultiert. Zur Reduzierung der Linienbreite und damit zur weiteren Verbesserung der Auflösung dieses Meßverfahrens stellt es weiterhin eine bekannte Maßnahme dar, die Untersuchungen bei einem verminderten Druck im Probenraum durchzuführen.

Ein Nachteil dieses bekannten Verfahrens ist darin zu sehen, daß für die Durchführung dieser auch als Stark-Spektroskopie bezeichneten Nachweismethode in der Regel elektrische Dipolmomente der zu untersuchenden Gasmoleküle erforderlich sind, die in der Größenordnung von mindestens 0.2 Debye liegen. Ferner gehen bei quantitativen Bestimmungen mittels dieses Verfahrens der im Probenraum herrschende Druck und die Temperatur unmittelbar in das Meßergebnis ein und müssen deshalb möglichst exakt kontrolliert und geregelt werden bzw. stellen mögliche Quellen für Fehlmessungen dar.

Darüber hinaus ist aus der Zeitschrift Review of Scientific Instruments, Band 52, Nr. 1, 1981, Seiten 33 bis 45, ein Meßverfahren gemäß dem Oberbegriff des Patentanspruchs 1 bekannt, das zur Untersuchung der Resonanzübergänge von kurzlebigen Molekülstrukturen dient. Grundlage für die Durchführung dieses bekannten Verfahrens ist ein Mikrowellenspektrometer, wie es im Oberbegriff des Patentanspruchs 10 angegeben ist. Bei diesem bekannten Verfahren werden die Partikel eines unter Atmosphärendruck stehenden Gases über ein vorzugsweise gepulstes Einlaßventil in einen evakuierten Rezipienten eingelassen und durch in einem Fabry-Perot Resonator erzeugte stehende Mikrowellen hindurchgeleitet, die ebenfalls in gepulster Form in den Resonator eingestrahlt werden. Da die Expansion des Gases im Rezipienten als adiabatischer Vorgang abläuft, entsteht ein Abkühleffekt, der eine Untersuchung der Struktur von einem Edelgas als Trägergas beigesetzten Molekülen mit Hilfe der Mikrowellenstrahlung dadurch ermöglicht, daß die zu beobachtenden Rotationslinien intensiver werden und linienreiche, komplizierte Rotationsspektren sich erheblich vereinfachen.

Aufgabe der Erfindung ist es, ein derartiges Verfahren und eine Vorrichtung so auszubilden, daß es auf einfache Weise eine möglichst exakte quantitative Bestimmung der Konzentration eines Gases in einem Gasgemisch ermöglicht. Das Verfahren sowie die Vorrichtung sollen dabei eine hohe Nachweisempfindlichkeit bei hohem Auflösungsvermögen und, daraus resultierend, eine geringe Querempfindlichkeit aufweisen und für die Analyse einer möglichst großen Anzahl von Gasgemischen, insbesondere auch zur Schadstoffanalyse, einsetzbar sein.

Die Erfindung löst diese Aufgabe durch ein Verfahren mit den kennzeichnenden Merkmalen des Patentanspruchs 1. Vorteilhafte Weiterbildungen des erfindungsgemäßen Verfahrens, die insbesondere der weiteren Steigerung seiner Nachweisempfindlichkeit und seines Auflösungsvermögens dienen, sind in den weiteren Verfahrensansprüchen 2 bis 7 angegeben.

Das erfindungsgemäße Verfahren ermöglicht es dabei, schneller und genauer zu messen als mit den bisher bekannten Nachweismethoden zur Schadstoffanalyse und erreicht durch seine hohe Auflösung eine nahezu vernachlässigbare Querempfindlichkeit. Zwar ist aus der DE-B-24 42 581 bereits eine Vorrichtung zur Gasanalyse bekannt geworden, die nach dem Stark-Effekt arbeitet und bei der unter anderem auch Luft mit interessierenden Beimengungen als Probegas untersucht wird, jedoch arbeitet das mit Hilfe dieser bekannten Vorrichtung realisierte Analyseverfahren mit einem statischen Gas, während bei dem Verfahren nach der Erfindung die als Trägergas dienende Luft in Form eines gepulsten Molekularstrahls in den Rezipienten eingebracht wird. Hier herrschte bislang die Auffassung, daß bei einem derartigen gepulsten Molekularstrahl die Verwendung von Edelgas als Trägergas zwingend notwendig sei, um ausreichende Abkühlung des zu untersuchenden Gasgemisches bei seiner Expansion ins Vakuum zu erreichen. Letztere ist erforderlich, um ein ausreichend starkes, direkt zu detektierendes Emissionssignal zu gewinnen. Überraschend hat sich nunmehr jedoch gezeigt, daß, entgegen dieser bisher geltenden Auffassung, auch mit Luft als Trägergas ein Abkühleffekt zu erzielen ist, der hinreichend groß ist, um die erforderliche Nachweisempfindlichkeit zu gewährleisten, so daß insbesondere auch die Analyse von Schadstoffanteilen in der Luft möglich ist.

Die zur Lösung vorgesehene Vorrichtung gemäß den Merkmalen der Ansprüche 8 bis 19 macht es dabei möglich, das Analyseverfahren nach der Erfindung bevorzugt auch für Messungen außerhalb des Laborrahmens einzusetzen und auf diese Weise beispielsweise vor Ort Schadstoffkonzentrationen zu messen. Ein großer Vorteil der erfindungsgemäßen Vorrichtung liegt dabei in der Möglichkeit einer raschen Umschaltbarkeit von einer Rotationslinie, d.h. von einer Substanz, auf eine zweite.

Ein weiterer Vorteil der Erfindung liegt darin, daß zur Erzeugung der Polarisationsmikrowelle einerseits und der Lokalmikrowelle andererseits insgesamt nur eine Quelle, ein Mikrowellensynthesizer, benötigt wird. In diesem wird zunächst die Lokalmikrowelle erzeugt, während die Polarisationsmikrowelle in dem erfindungsgemäß vorgesehenen Einseitenbandmischer durch Mischen der Lokalmikrowelle mit einer Radiofrequenzwelle erzeugt wird. Letztere wiederum wird im weiterhin erfindungsgemäß vorgesehenen Frequenzvervielfacher aus der internen Standardfrequenz des Mikrowellensynthesizers erzeugt. Alle Funktionen dieses Synthesizers können dabei über den Prozeßrechner kontrolliert werden. In der Verwendung eines derartigen Mikrowellensynthesizers unterscheidet sich die erfindungsgemäße Vorrichtung nicht nur von einer Vorrichtung gemäß dem Oberbegriff des Patentanspruchs 9, wie sie auch aus der bereits zitierten Literaturstelle in der Zeitschrift Review of Scientific Instruments bekannt ist, sondern zugleich auch von einem sogenannten MRR (molekular rotational resonance) -Spektrometer, das in der Zeitschrift Hewlett-Packard Journal, Juni 1971, Seite 2 bis 16 beschrieben ist. Bei diesem letztgenannten, ohnehin nach einem anderen Prinzip arbeitenden Spektrometer ist als Mikrowellenquelle ein sogenannter Backward Wave Oscillator (BWO) vorgesehen, der auf eine harmonische Oberwelle eines Radiofrequenzsynthesizers stabilisiert wird und der demzufolge bei jeder Änderung der Mikrowellenfrequenz erneut stabilisiert werden muß. Dadurch, daß der bei der Vorrichtung nach der Erfindung verwendete Mikrowellensynthesizer einen schnellen, rechnergesteuerten Frequenzwechsel und damit den raschen Wechsel von einer zu analysierenden Gaskomponente zu einer anderen gestattet, wird eine weitgehende Automatisierung des erfindungsgemäßen Meßverfahrens ermöglicht und es wird damit für Anwendungen außerhalb des Laborbereichs geeignet.

Um die Empfindlichkeit und Meßgenauigkeit des Verfahrens nach der Erfindung weiter zu erhöhen, ist es ferner möglich, über mehrere Meßzyklen zu mitteln. Die mögliche Pulsfolgefrequenz ist dabei in erster Linie von der Leistung des verwendeten Pumpsystems abhängig.

Insgesamt ist das erfindungsgemäße Verfahren und die Vorrichtung auf alle gasförmigen Moleküle anwendbar, die in dem zur Verfügung stehenden Frequenzbereich der Mikrowellenstrahlung geeignete Rotationslinien aufweisen. Darüber hinaus besteht die Möglichkeit, insbesondere kleine leichte Moleküle mit einem Trägergas, beispielsweise Stickstoff, Anlagerungskomplexe, sogenannte van-der-Waals-Komplexe, bilden zu lassen, die dann rotationsspektroskopisch untersucht werden können. Bei schwereren Molekülen ist es möglich, diese über eine beheizbare Einlaßdüse für den Detektor thermisch zu zerlegen und sie dann über die entstehenden Bruchstücke nachzuweisen.

Der Anwendungsbereich des Verfahrens nach der Erfindung umfaßt somit des gesamte Gebiet der konventionellen Mikrowellenspektroskopie, ohne indes auf diese beschränkt zu sein. Vielmehr ist dieses Verfahren auf eine darüber hinaus gehende Zahl von Molekülen und Molekülkomplexen anwendbar und sowohl für Schadstoffmessungen in Luft als auch für die Prozeßgasanalyse einsetzbar.

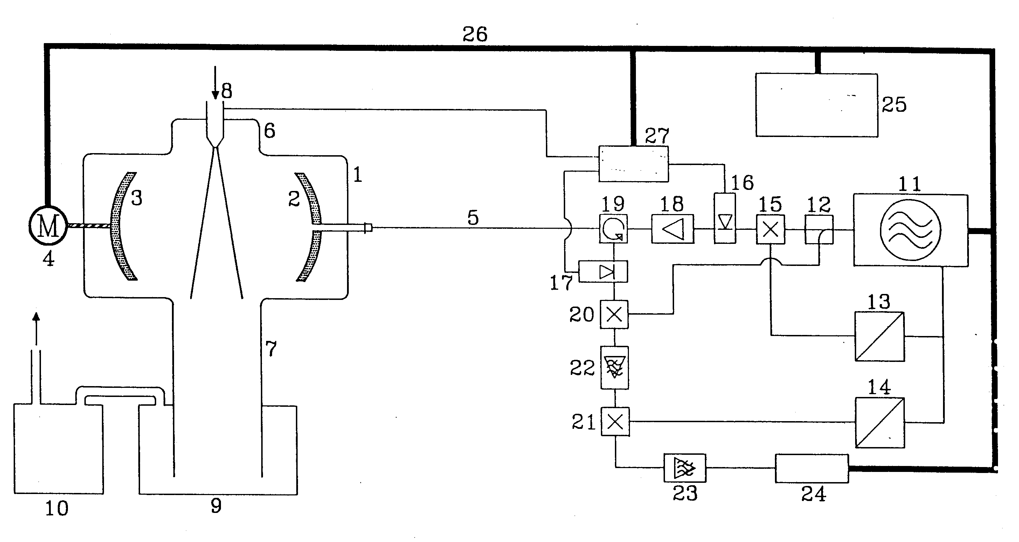

Im folgenden wird die Erfindung anhand eines in der Zeichnung dargestellten schematischen Ausführungs-beispiels näher erläutert. Hierbei wird ein prinzipieller Aufbau eines Mikrowellenspektrometers dargestellt.

In einem Rezipienten 1 ist ein Mikrowellenresonator vom Typ eines Fabry-Perot-Hohlraumresonators angeordnet, der aus zwei einander gegenüberliegend gehalterten Hohlspiegeln 2 und 3 besteht. Bei dem hier beschriebenen Ausführungsbeispiel ist einer der beiden Hohlspiegel 2 fest mit dem Rezipienten 1 verbunden, während der zweite Hohlspiegel 3 in Richtung der Mittelachse der beiden Hohlspiegel 2,3 beweglich gehaltert ist, wobei zu seiner Verstellung ein ansteuerbarer Stellantrieb 4 vorgesehen ist. Der feststehend angeordnete Hohlspiegel 2 weist in seinem Zentrum eine Bohrung auf, in die eine durch eine der Stirnwände des im wesentlichen zylindrischen Rezipienten 1 geführte Zuleitung 5 zur Einkoppelung der Mikrowellenstrahlung mündet.

Am Umfang des Rezipienten 1 sind, in etwa in der Mitte zwischen den beiden Hohlspiegeln 2 und 3, in etwa rechtwinklig zur Längsachse des Rezipienten 1 zwei Rohrstutzen 6 und 7 vorgesehen, von denen der Rohrstutzen 6 auf seiner Stirnfläche eine Einlaßdüse 8 trägt, während der Rohrstutzen 7 zu einem zweistufigen System von Vakuumpumpen 9 und 10 führt, wobei zur Erzeugung des Endvakuums eine Diffusionspumpe 9 dient. Als Einlaßdüse 8 eignet sich dabei beispielsweise eine Einspritzdüse für Benzinmotoren. Der Rezipient 1 sowie das Pumpsystem 9,10 sind im Fall des hier beschriebenen Ausführungsbeispiels zu einer modulförmigen Einheit zusammengefaßt.

In einem zweiten Modul sind die Komponenten zur Erzeugung der Mikrowellenstrahlung sowie zur Aufbereitung der Meßsignale untergebracht. Diese bestehen im einzelnen aus einem Mikrowellensynthesizer 11 für die Erzeugung der Mikrowellen, einem Richtkoppler 12, zwei Frequenzvervielfachern 13 und 14, einem Einseitenbandmischer 15, zwei PIN-Dioden 16 und 17, einem Mikrowellenverstärker 18, einem Zirkulator 19, zwei weiteren Mischern 20 und 21, zwei schmalbandigen Verstärkern 22 und 23 sowie einem Analog-Digital-Wandler 24. Vervollständigt wird die Anordnung durch einen Prozeßrechner 25, der über Busleitungen 26 mit dem Stellantrieb 4, dem Synthesizer 11, dem A/D-Wandler 24 sowie einer Kontrolleinheit 27 verbunden ist. Letztere steht ihrerseits mit den beiden PIN-Dioden 16 und 17 sowie mit der Einlaßdüse 8 in Verbindung.

Im Synthesizer 11 wird eine Mikrowellenstrahlung mit einer Frequenz erzeugt, die im Fall des hier beschriebenen Ausführungsbeispiels etwa 160 MHz unterhalb der zu beobachtenden Rotationsfrequenz der Gasmoleküle liegt, deren Konzentration gemessen werden soll. Der Richtkoppler 12 teilt die Mikrowellenstrahlung in zwei Strahlengänge auf, wobei ein Teil der Mikrowellenstrahlung dem Einseitenbandmischer 15 zugeführt wird. Hier wird die Frequenz der einfallenden Strahlung mit einer Frequenz von 160 MHz gemischt und das obere Seitenband bevorzugt erzeugt, dessen Frequenz nunmehr der Emissionsfrequenz der Gasmoleküle entspricht. Diese in der Frequenz geänderte Mikrowelle wird zur PIN-Diode 16 weitergeleitet. Die Standardfrequenz von 160 MHz wird dabei ebenso wie eine bei der Signalverarbeitung benötigte Frequenz von 130 MHz jeweils in den Frequenzvervielfachern 13 bzw. 14 durch die Vervielfachung der internen Standardfrequenz von 10 MHz des Synthesizers 11 erzeugt.

In der ersten PIN-Diode 16 wird aus der zunächst noch kontinuierlichen Mikrowellenstrahlung eine gepulste Strahlung mit einer Pulsdauer von bis zu ca. 2000 Nanosekunden erzeugt, die im Mikrowellenverstärker 18 verstärkt und über den Zirkulator 19 in den Mikrowellenresonator 2,3 eingekoppelt wird. Die Ansteuerung der PIN-Diode erfolgt über die Kontrolleinheit 27, die ihrerseits vom Prozeßrechner 25 beaufschlagt wird.

Im Resonator 2,3 werden die Moleküle des zu untersuchenden Gases durch die gepulste Mikrowellenstrahlung in quantenmechanische Mischzustände gebracht, die ihrerseits zur Emission von Mikrowellenstrahlung der dem Molekül eigenen Rotationsfrequenz führen. Dieses Emissionssignal wird über den Zirkulator 19 aus dem Resonator 2,3 ausgekoppelt, der es in die nachgeschaltete Empfangseinrichtung leitet. Hierzu öffnet jeweils nach dem Ende eines Mikrowellenpulses, von der Kontrolleinheit 27 beaufschlagt, die zweite PIN-Diode 17, die während der Dauer des Anregungspulses dem Schutz der Empfangseinheit dient. Das Emissionssignal wird im Mischer 20 mittels des zweiten Teiles der vom Richtkoppler 12 geteilten Mikrowellenstrahlung auf eine Frequenz von 160 MHz abgemischt. Die Zwischenfrequenz wird dem Mischer 20 entnommen. Nach einer schmalbandigen Verstärkung im Verstärker 22 erfolgt im Mischer 21 eine nochmalige Abmischung mit einer Frequenz von 130 MHz, die aus dem zweiten Frequenzvervielfacher 14 stammt. Das so erzeugte Signal mit einer Frequenz von ca. 30 MHz wird im Verstärker 23 nochmals verstärkt und schließlich im A/D-Wandler 24 in ein digitales Signal überführt, das dem Prozeßrechner 25 zur Signalwertmittelung und weiteren Verarbeitung, in diesem Fall einer Fourieranalyse, zugeleitet wird.

Der Ablauf einer Messung mit der vorstehend beschriebenen Anordnung ist dabei wie folgt: Für die Aufnahme eines Rotationsspektrums wird über die Einlaßdüse 8 eine geringe Menge eines Gases bzw. eines Gasgemisches, dessen Zusammensetzung ermittelt werden soll, mit Luft als Trägergas in den Rezipienten eingelassen, in dem ein Druck von weniger als 10⁻² Pascal herrscht. Dadurch entsteht im Rezipienten ein Molekularstrahl, der sich senkrecht zur Achse des Mikrowellenresonators 2,3 bewegt. Gleichzeitig wird in den Resonator 2,3 ein Mikrowellenpuls eingekoppelt, der, da seine Frequenz der des zu beobachtenden Rotationsüberganges entspricht, die zu untersuchende Substanz zur Emission des ihr eigenen Rotationsspektrums anregt, die aus dem Resonator 2,3 ausgekoppelt wird.

Die Abstimmung des Resonators 2,3 auf die jeweilige molekulare Übergangsfrequenz erfolgt dabei durch eine Veränderung des Abstandes der beiden Hohlspiegel 2 und 3, indem der Hohlspiegel 3 über den Stellantrieb 4, vom Prozeßrechner 25 gesteuert, verfahren wird. Das Emissionssignal wird der beschriebenen Empfangs- und Auswerteeinrichtung zugeführt.

Das zeitlich abklingende Emissionssignal wird im vorliegenden Fall in Abständen von 10 bis 500 Nanosekunden abgetastet, digitalisiert und im Prozeßrechner 25 gespeichert. Die Aufnahme einer Messung dauert dabei etwa 10 bis 500 Mikrosekunden. Zur weiteren Auswertung wird das aufgenommene Signal, falls notwendig, durch Mittelung rauschfreier gemacht und durch Fouriertransformation die typische Rotationsfrequenz ermittelt. Das aufgenommene Emissionssignal hängt dabei in komplexer Weise von der Konzentration des Gases, den molekularen Parametern, beispielsweise des Rotationsüberganges, sowie den Geräteparametern ab. Zur Entfaltung dieser komplexen Funktion wird deshalb im vorliegenden Fall in der Pause zwischen zwei Pulsen des Molekularstrahls eine Leeraufnahme durchgeführt und durch Differenzbildung der beiden Signale der Einfluß der Geräteparameter kompensiert.

Indem für jede der zu analysierenden Substanzen eine Kalibrierkurve aufgenommen und im Prozeßrechner 25 gespeichert wird, kann die Bestimmung der Konzentration dieser Substanz durch einen Vergleich mit dieser Kalibrierkurve erfolgen. Zur Umschaltung von einer Substanz auf die nächste wird, vom Prozeßrechner 25 veranlaßt, jeweils die Anregungsfrequenz sowie der Abstand der Hohlspiegel 2 und 3 verändert, wozu ein Zeitraum von wenigen Sekunden erforderlich ist, so daß eine rasche Ermittlung der quantitativen Zusammensetzung eines Gasgemisches erfolgen kann.

### Bezugszeichenliste

- 1: Rezipient
- 2,3: Hohlspiegel (Mikrowellenresonator)
- 4: Stellantrieb
- 5: Zuleitung
- 6,7: Rohrstutzen
- 8: Einlaßdüse
- 9,10: Vakuumpumpen
- 11: Synthesizer
- 12: Richtkoppler
- 13,14: Frequenzvervielfacher
- 15: Einseitenbandmischer
- 16,17: PIN-Dioden
- 18: Mikrowellenverstärker
- 19: Zirkulator
- 20,21: Mischer
- 22,23: Verstärker
- 24: A/D-Wandler
- 25: Prozeßrechner
- 26: Busleitung
- 27: Kontrolleinheit

## Patentansprüche

1. Verfahren zur Untersuchung von Substanzen mittels Mikrowellen durch die Analyse eines Emissionsspektrums, das von den aufgrund der Mikrowellenstrahlung zu Rotationsübergängen angeregten Molekülen abgestrahlt wird, bei dem die zu untersuchende Substanz zusammen mit einem Trägergas als gepulster Molekularstrahl in einen in einem evakuierten Rezipienten angeordneten Mikrowellenresonator geleitet wird, der auf die Frequenz des zu untersuchenden Rotationsüberganges abstimmbar ist und in den Mikrowellen einer Frequenz eingestrahlt werden, die ebenfalls der Frequenz dieses Rotationsüberganges entspricht, bei dem das von den Molekülen abgestrahlte Emissionsspektrum aus dem Resonator ausgekoppelt und einer Empfangs- und Auswerteeinheit zugeleitet wird, bei dem als Trägergas Luft verwendet wird, die zusasammen mit wenigstens einer weiteren gasfömigen Komponente die zu untersuchende Substanz bildet und bei dem die Konzentration dieser Komponente aus der Intensität des Emissionssignales dieser Komponente ermittelt wird, indem der Zusammenhang zwischen der Konzentration einer Gaskomponente und der Intensität ihres Emissionsspektrums vor der eigentlichen Messung in Form einer Kalibrierkurve ermittelt und in der Auswerteeinheit (25) gespeichert wird.

2. Verfahren nach Anspruch 1, dadurch gekennzeichnet, daß das aufgenommene Emissionsspektrum einer Fourieranalyse unterzogen wird.

3. Verfahren nach einem der Ansprüche 1 oder 2, dadurch gekennzeichnet, daß während der Pausendauer des Molekularstrahls eine Referenzmessung durchgeführt und eine Differenzbildung zwischen dem Meßsignal und dem Referenzsignal vorgenommen wird.

4. Verfahren nach Anspruch 3, dadurch gekennzeichnet, daß die Pulsfolgefrequenz des Molekularstrahls bis zu 100 Hz beträgt.

5. Verfahren nach Anspruch 3, dadurch gekennzeichnet, daß die Dauer des Mikrowellenpulses im Bereich von 10 bis etwa 2000 Nanosekunden liegt.

6. Verfahren nach Anspruch 4 dadurch gekennzeichnet, daß die Digitalisierung des Meßsignals mit einer Abtastrate von etwa 10 bis 500 Nanosekunden erfolgt.

7. Verfahren nach einem der Ansprüche 1 bis 5 dadurch gekennzeichnet, daß das Meßsignal durch wenigstens einen Frequenzmischungsvorgang in einen Frequenzbereich zwischen 1 und etwa 50 MHz abgemischt und nachfolgend digitalisiert wird.

8. Vorrichtung zur Untersuchung von Substanzen mittels Mikrowellen, insbesondere zur Durchführung des Verfahrens nach einem der Ansprüche 1 bis 7, mit wenigstens einem Mikrowellenerzeuger, einer Meßzelle sowie Verstärkungs- und Auswerteeinrichtungen für das Meßsignal, wobei die Meßzelle aus einem in einem Rezipienten angeordneten,von zwei in veränderbarem Abstand voneinander gehalterten Hohlspiegeln gebildeten Mikrowellenresonator besteht und wobei sowohl der Pfad zur Einkoppelung der Mikrowellenstrahlung in den Resonator als auch der Meßsignalpfad jeweils mit einer Vorrichtung zur kontrollierbaren Pulserzeugung versehen sind und wenigstens eine Einrichtung zur Frequenzmischung vorgesehen ist, dadurch gekennzeichnet, daß der Mikrowellenerzeuger von einem einzelnen Mikrowellensynthesizer (11) gebildet wird, dem wenigstens ein Frequenzvervielfacher (13, 14) sowie ein Einseitenbandmischer (15) zur phasenstarren Kopplung zwischen Ausgangssignal des Mikrowellensynthesizers (11) und der von dem vom Frequenzvervielfacher (13) beaufschlagten Einseitenbandmischer (15) erzeugten Mikrowellenstrahlung zugeordnet ist.

9. Vorrichtung nach Anspruch 8, dadurch gekennzeichnet, daß dem Mikrowellensynthesizer (11) ein Richtkoppler (12), wenigstens eine PIN-Diode (16) sowie ein Mikrowellenverstärker (18) nachgeschaltet sind, die zusammen den Pfad zur Einkoppelung der Mikrowellenstrahlung in den Resonator (2,3) bilden.

10. Vorrichtung nach Anspruch 8 oder 9, dadurch gekennzeichnet, daß sowohl die Einkoppelung als auch die Auskoppelung des Mikrowellensignals aus dem Resonator (2,3) an dem gleichen Spiegel (2) sowie über die gleiche Mikrowellen-Zuleitung (5) erfolgt.

11. Vorrichtung nach Anspruch 10, dadurch gekennzeichnet, daß für die Einkoppelung der Mikrowellenstrahlung in den Resonator (2,3) sowie zur Auskoppelung des Meßsignals aus diesem ein Zirkulator (19) vorgesehen ist.

12. Vorrichtung nach Anspruch 11, dadurch gekennzeichnet, daß der Meßsignalpfad wenigstens eine dem Zirkulator (19) nachgeschaltete PIN-Diode (17) sowie wenigstens einen Mischer (20,21) und einen Verstärker (22,23) aufweist.

13. Vorrichtung nach Anspruch 12, dadurch gekennzeichnet, daß der Richtkoppler (12) mit einem im Meßsignalpfad angeordneten Mischer (20) über einen Mikrowellenleiter verbunden ist.

14. Vorrichtung nach Anspruch 13, dadurch gekennzeichnet, daß dem ersten Mischer (20) sowie Verstärker (22) ein weiterer Mischer (21) sowie ein weiterer Verstärker (23) nachgeschaltet sind.

15. Vorrichtung nach Anspruch 14, dadurch gekennzeichnet, daß zwei Frequenzvervielfacher (13,14) vorgesehen sind, von denen einer mit dem Einseitenbandmischer (15) und der zweite mit dem weiteren Mischer (21) verbunden ist und daß die Frequenzvervielfacher (13,14) mit der internen Standardfrequenz des Mikrowellensynthesizers (11) beaufschlagbar sind.

16. Vorrichtung nach einem der Ansprüche 8 bis 15, dadurch gekennzeichnet, daß dem Meßsignalpfad ein Analog/Digital-Wandler (24) nachgeschaltet ist, der mit einem Prozeßrechner (25) verbunden ist.

17. Vorrichtung nach einem der Ansprüche 8 bis 16, dadurch gekennzeichnet, daß eine am Rezipienten (1) angeordnete Einlaßdüse (8) über eine Kontrolleinheit (27) zur Erzeugung eines gepulsten Molekularstrahls ansteuerbar ist.

18. Vorrichtung nach einem der Anspruch 17, dadurch gekennzeichnet, daß die Kontrolleinheit (27) mit dem Prozeßrechner (25) verbunden ist.

19. Vorrichtung nach einem der Ansprüche 16 bis 18, dadurch gekennzeichnet, daß wenigstens einer der Spiegel des Resonators (2,3) mit einem vom Prozeßrechner (25) ansteuerbaren Stellantrieb (4) versehen ist.

## Claims

1. Method of investigating substances by means of microwaves by analysis of an emission spectrum which is emitted by molecules excited to rotational transitions on the basis of microwave radiation, in which the substance to be investigated is conducted together with a carrier gas as a pulsed molecular beam into a microwave resonator arranged in an evacuated recipient, which resonator is tuneable to the frequency of the rotational transition to be investigated and into which microwaves of a frequency likewise corresponding to the frequency of this rotational transition are radiated, in which the emission spectrum emitted by the molecules is tapped from the resonator and supplied to a receiving and evaluation unit, in which air is used as a carrier gas and together with at least one other gaseous component forms the substance to be investigated, and in which the concentration of this component is ascertained from the intensity of the emission signal of this component, the connection between the concentration of a gas component and the intensity of its emission spectrum being ascertained before the actual measurement in the form of a calibrating curve and stored in the evaluation unit (25).

2. Method according to claim 1, characterized in that the emission spectrum recorded is subjected to a Fourier analysis.

3. Method according to one of claims 1 or 2, characterized in that during the pause time of the molecular beam, a reference measurement is taken and a subtraction performed between the measuring signal and the reference signal.

4. Method according to claim 3, characterized in that the pulse repetition frequency of the molecular beam is up to 100 Hz.

5. Method according to claim 3, characterized in that the duration of the microwave pulse lies in the range of 10 to roughly 2000 nanoseconds.

6. Method according to claim 4, characterized in that the digitalization of the measuring signal is accomplished at a scanning frequency of roughly 10 to 500 nanoseconds.

7. Method according to any one of claims 1 to 5, characterized in that the measuring signal is mixed by means of at least one frequency mixing process into a frequency range between 1 and roughly 50 MHz and subsequently digitalized.

8. Device for investigating substances by means of microwaves, in particular for implementing the method according to any one of claims 1 to 7, with at least one microwave generator, one measuring cell and amplification and evaluation devices for the measuring signal, the measuring cell consisting of a microwave resonator arranged in a recipient and formed by two concave mirrors mounted at an adjustable distance from one another and both the path for injecting the microwave radiation into the resonator and the measuring signal path respectively being equipped with a device for the controllable generation of pulses and at least one device for frequency mixing being provided, characterized in that the microwave generator is formed by a single microwave synthesizer (11), to which at least one frequency multiplier (13, 14) and a single sideband mixer (15) for the phase-locked coupling of the output signal of the microwave synthesizer (11) and the microwave radiation generated by the single sideband mixer (15) acted upon by the frequency multiplier (13) is assigned.

9. Device according to claim 8, characterized in that connected in series to the microwave synthesizer (11) are a directional coupler (12), at least one PIN diode (16) and a microwave amplifier (18), which together form the path for injection of the microwave radiation into the resonator (2, 3).

10. Device according to claim 8 or 9, characterized in that both the injection and the tapping of the microwave signal from the resonator (2, 3) is effected at the same mirror (2) and via the same microwave supply line (5).

11. Device according to claim 10, characterized in that for the injection of the microwave radiation into the resonator (2, 3) and for the tapping of the measuring signal from this a circulator (19) is provided.

12. Device according to claim 11, characterized in that the measuring signal path has at least one PIN diode (17) connected in series to the circulator (19) and at least one mixer (20, 21) and one amplifier (22, 23).

13. Device according to claim 12, characterized in that the directional coupler (12) is connected via a microwave line to a mixer (20) arranged in the measuring signal path.

14. Device according to claim 13, characterized in that connected in series to the first mixer (20) and amplifier (22) are a further mixer (21) and a further amplifier (23).

15. Device according to claim 14, characterized in that two frequency multipliers (13, 14) are provided, of which one is connected to the single sideband mixer (15) and the second to the other mixer (21), and that the frequency multipliers (13, 14) can be acted upon with the internal standard frequency of the microwave synthesizer (11).

16. Device according to any one of claims 8 to 15, characterized in that connected in series to the measuring signal path is an analog-to-digital converter (24), which is connected to a process computer (25).

17. Device according to any one of claims 8 to 16, characterized in that an admission nozzle (8) arranged on the recipient (1) is triggerable via a control unit (27) to generate a pulsed molecular beam.

18. Device according to claim 17, characterized in that the control unit (27) is connected to the process computer (25).

19. Device according to any one of claims 16 to 18, characterized in that at least one of the mirrors of the resonator (2, 3) is equipped with an actuating drive (4) triggerable by the process computer (25).

## Revendications

1. Procédé pour l'étude de substances par microondes par l'analyse d'un spectre d'émission qui est émis par les molécules excitées par le rayonnement à micro-ondes pour des transitions de rotation, dans lequel la substance à étudier est amenée avec un gaz porteur sous forme d'un jet moléculaire pulsé dans un résonateur à micro-ondes disposé dans un récipient mis sous vide, ledit résonateur pouvant être réglé à la fréquence de la transition de rotation à examiner et dans lequel des micro-ondes sont rayonnées avec une fréquence correspondant également à la fréquence de cette transition de rotation, dans lequel le spectre d'émission émis par les molécules est découplé du résonateur et est amené à une unité de réception et d'évaluation, dans lequel on utilise comme gaz porteur de l'air qui forme avec au moins un autre composant gazeux, la substance à examiner et dans lequel la concentration de ces constituants est déterminée d'après l'intensité du signal d'émission de ces constituants, alors que la relation entre la concentration d'un constituant gazeux et l'intensité de son spectre d'émission est déterminée avant la mesure proprement dite, sous la forme d'une courbe d'étalonnage et est mise en mémoire dans l'unité d'évaluation (25).

2. Procédé selon la revendication 1, caractérisé en ce que le spectre d'émission reçu est soumis à une analyse de Fourier.

3. Procédé selon l'une des revendications 1 ou 2, caractérisé en ce que, pendant la durée d'interruption du jet moléculaire, une mesure de référence est effectuée et qu'une formation de différence entre le signal de mesure et le signal de référence est réalisée.

4. Procédé selon la revendication 3, caractérisé en ce que la fréquence de succession des impulsions du jet moléculaire atteint jusqu'à 100 Hz.

5. Procédé selon la revendication 3, caractérisé en ce que la durée de l'impulsion des micro-ondes se situe dans le domaine de 10 à environ 2000 nanosecondes.

6. Procédé selon la revendication 4, caractérisé en ce que la numérisation du signal de mesure est effectuée à une vitesse d'analyse d'environ 10 à 500 nanosecondes.

7. Procédé selon l'une des revendications 1 à 5, caractérisé en ce que le signal de mesure est mélangé par au moins une opération de mélange de fréquence, dans une gamme de fréquence entre 1 et environ 50 mHz et est numérisé ensuite.

8. Dispositif pour l'étude de substances au moyen de micro-ondes et, en particulier, pour effectuer le procédé selon l'une des revendications 1 à 7 avec, au moins, un générateur de micro-ondes, une cellule de mesure ainsi que des dispositifs d'amplification et d'évaluation pour le signal de mesure, dans lequel la cellule de mesure est constituée d'un resonateur à micro-ondes disposé dans un récipient et formé de deux miroirs creux maintenus à une distance variable l'un de l'autre et dans lequel, tant le trajet pour le couplage du rayonnement des micro-ondes dans le résonateur, que le trajet du signal de mesure sont équipés d'un dispositif pour créer des impulsions contrôlables et dans lequel il est prévu au moins un dispositif pour le mélange des fréquences, caractérisé en ce que le générateur de micro-ondes est formé par un seul synthétiseur de micro-ondes (11) auquel correspond au moins un multiplicateur de fréquence (13, 14) ainsi qu'un mélangeur à bande latérale unique (15) pour le couplage à phase rigide entre le signal de sortie du synthétiseur de micro-ondes (11) et le rayonnement de micro-ondes créé par le mélangeur a bande latérale unique (15) activé par le multiplicateur de fréquence (13).

9. Dispositif selon la revendication 8, caractérisé en ce que le synthétiseur de micro-ondes (11) est suivi par un coupleur directionnel (12), par au moins une diode PIN (16) ainsi que par un amplificateur de micro-ondes (18) qui forment ensemble le trajet de couplage du rayonnement de micro-ondes dans le résonateur (2, 3).

10. Dispositif selon la revendication 8 ou 9, caractérisé en ce que, tant le couplage que le découplage du signal des micro-ondes provenant du résonateur (2, 3), ont lieu sur le même miroir (2), ainsi que par le même conducteur de micro-ondes (5).

11. Dispositif selon la revendication 10, caractérisé en ce qu'un circulateur (19) est prévu pour le couplage du rayonnement des micro-ondes dans le résonateur (2, 3) ainsi que pour le découplage du signal de mesure de celui-ci.

12. Dispositif selon la revendication 11, caractérisé en ce qu'il existe dans le trajet du signal de mesure au moins une diode PIN (17) située après le circulateur (19) ainsi qu'au moins un mélangeur (20, 21) et un amplificateur (22, 23).

13. Dispositif selon la revendication 12, caractérisé en ce que le coupleur directionnel (12) est connecté à un mélangeur (20) disposé dans le trajet du signal de mesure, par l'intermédiaire d'un conducteur à micro-ondes.

14. Dispositif selon la revendication 13, caractérisé en ce que le premier mélangeur (20) ainsi que l'amplificateur (22) sont suivis par un autre mélangeur (21) ainsi que par un autre amplificateur (23).

15. Dispositif selon la revendication 14, caractérisé en ce qu'il est prévu deux multiplicateurs de fréquence (13, 14), dont l'un est connecté au mélangeur a bande latérale unique (15) et que le deuxième est connecté à un autre mélangeur (21) et en ce que le multiplicateur de fréquence (13, 14) peut être alimenté par la fréquence standard interne du synthétiseur de micro-ondes (11).

16. Dispositif selon l'une des revendications 8 à 15, caractérisé en ce que le trajet de signal de mesure est suivi par un convertisseur analogique/numérique (24) qui est connecté à un ordinateur de procédé (25).

17. Dispositif selon l'une des revendications 8 à 16, caractérisé en ce qu'une buse d'entrée (8) disposée sur le récipient (1) peut être commandée par une unité de contrôle (27) pour produire un jet moléculaire pulsé.

18. Dispositif selon la revendication 17, caractérisé en ce que l'unité de contrôle (27) est connectée à l'ordinateur de procédé (25).

19. Dispositif selon l'une des revendications 16 à 18, caractérisé en ce qu'au moins l'un des miroirs du résonateur (2, 3) est pourvu d'une commande de réglage (4) pouvant être commandé par l'ordinateur de procédé (25).
